# EUROPÄISCHE PATENTSCHRIFT

(11) **EP 3 460 150 B1**
(45) Veröffentlichungstag und Bekanntmachung des Hinweises auf die Patenterteilung: **11.11.2020**
(21) Anmeldenummer: 18182160.4
(22) Anmeldetag: 06.07.2018
(51) Int. Cl.: E05B 85/10, B60Q 1/26, E05B 17/10

(54) **TÜRAUSSENGRIFF UND DAMIT AUSGESTATTETES KRAFTFAHRZEUG**
OUTSIDE DOOR HANDLE AND MOTOR VEHICLE EQUIPPED WITH SAME
POIGNÉE EXTÉRIEURE DE PORTE ET VÉHICULE AUTOMOBILE ÉQUIPÉ D'UNE TELLE POIGNÉE EXTÉRIEURE DE PORTE

(30) Priorität: 26.09.2017 DE 102017122348
(43) Veröffentlichungstag der Anmeldung: 27.03.2019
(73) Patentinhaber: Witte Automotive GmbH, 42551 Velbert (DE)
(72) Erfinder: Mrnustík, Luká, 36017 Karlovy Vary (CZ)
(74) Vertreter: Manitz Finsterwald Patent- und Rechtsanwaltspartnerschaft mbB

(56) Entgegenhaltungen:
- EP-A1- 3 071 451
- WO-A1-2015/150157
- US-A1- 2010 321 945
- US-A1- 2010 321 946

## Beschreibung

Die vorliegende Erfindung betrifft einen Türaußengriff sowie ein mit einem solchen Türaußengriff ausgestattetes Kraftfahrzeug.

Es ist bekannt, Türaußengriffe für Kraftfahrzeuge mit einer sogenannten Vorfeld-und/oder Griffmuldenbeleuchtung auszustatten. Die Vorfeld- und/oder Griffmuldenbeleuchtung trägt zu einer Erhöhung des Bedienkomforts bei Dunkelheit bei, indem sie für die Ausleuchtung einer hinter dem Türaußengriff gelegenen Griffmulde beziehungsweise für die Ausleuchtung eines vor dem Kraftfahrzeug gelegenen Bodenbereichs sorgt. Für eine homogene Ausleuchtung sowohl hinsichtlich der Intensität als auch der Farbe des austretenden Lichts kann die Lichtaustrittsfläche bekannter Türaußengriffe aufgeraut sein. Ebenso kann die Lichtaustrittsfläche durch andere optische Komponenten gebildet sein.

Durch aktuelle gesetzliche Vorschriften wird nun verlangt, dass Lichtaustrittsflächen von derartigen Beleuchtungen ausgehend von einem Blickpunkt in mindestens 10 m Abstand zu dem Kraftfahrzeug und in einer Höhe von zumindest 1 m über dem Fahrzeuguntergrund nicht mehr wahrgenommen werden darf. Im Fall von aufgerauten Lichtaustrittsflächen oder anderen optischen Komponenten an der Außenkontur des Türaußengriffs besteht jedoch die Gefahr, dass die jeweiligen Lichtaustrittsflächen aus dem vorliegenden relevanten Blickbereich wahrgenommen werden können.

Ein Türaußengriff gemäß dem Oberbegriff des Anspruchs 1 ist aus der US 2010/321946 A1 bekannt. Weiterer Stand der Technik ist in der EP 3 071 451 A1, der WO 2015/150157 A1 sowie der US 2010/321945 A1 beschrieben.

Der Erfindung liegt die Aufgabe zugrunde, einen Türaußengriff anzugeben, bei dem einerseits eine homogene Ausleuchtung ermöglicht und gleichzeitig die Gefahr der Wahrnehmbarkeit der Lichtaustrittsfläche verringert wird. Ebenso soll ein Fahrzeug mit einem solchen Türaußengriff angeben werden.

In Bezug auf den Türaußengriff wird diese Aufgabe durch den Gegenstand des Anspruchs 1 gelöst. Ein erfindungsgemäßes Kraftfahrzeug ist Gegenstand von Anspruch 12. Vorteilhafte Ausbildungen der Erfindung sind den jeweiligen Unteransprüchen, der Beschreibung und der Zeichnung zu entnehmen.

Ein erfindungsgemäßer Türaußengriff, insbesondere für ein Kraftfahrzeug, ist mit einem eine Außenkontur aufweisenden Griffkörper, mit einer von dem Griffkörper aufgenommenen Lichtquelle für eine Vorfeld- und/oder Griffmuldenbeleuchtung und mit einem Diffusor ausgestattet, wobei der Diffusor zur Streuung des von der Lichtquelle abgestrahlten Lichts in diffuses Licht innenliegend im Griffkörper mit einem Abstand von dessen Außenkontur angeordnet ist.

Der Erfindung liegt dementsprechend der Gedanke zugrunde, den Diffusor innenliegend im Griffkörper anzuordnen, um dadurch die Gefahr der Wahrnehmbarkeit von Lichtaustrittsflächen der Beleuchtung zu reduzieren. Die innenliegende Anordnung des Diffusors ermöglicht insbesondere dessen geeignete Verdeckung durch benachbarte Griffkörperabschnitte. Auf diese Weise wird die Gefahr der unmittelbaren Sichtbarkeit von Lichtaustrittsflächen aus Blickpositionen von zumindest 1 m oberhalb des jeweiligen Fahrzeuguntergrunds und in 10 m Entfernung von dem Fahrzeug reduziert. Gleichzeitig stellt der Einsatz eines Diffusors einen hinsichtlich Intensität und Farbe homogenen Lichtaustritt sicher, sodass ein ansprechendes Beleuchtungsergebnis erzielt werden kann.

Gemäß einer bevorzugten Ausführungsform weist der Diffusor eine aufgeraute Oberfläche und/oder in seinem Volumen eingeschlossene Streuzentren auf, wodurch die Erzeugung von diffusem Licht sicher und mit nur geringem apparativem Aufwand beziehungsweise Materialeinsatz bewerkstelligt werden kann.

In weiter bevorzugter Weise ist der Diffusor Teil eines optischen Systems, das zur Veränderung der Abstrahlcharakteristik des von der Lichtquelle abgestrahlten Lichts innenliegend im Griffkörper mit einem Abstand von dessen Außenkontur angeordnet ist. Unter Abstrahlcharakteristik wird hier insbesondere die Form, Größe und/oder Richtung der Lichtausbreitung beziehungsweise des Lichtkegels und/der der Grad der Diffusion des Lichts verstanden. Demgegenüber soll im Sinne der vorliegenden Erfindung die reine Parallelverschiebung von Lichtwellen, etwa durch transparente Abdeckungen ohne Linsen- oder Blendenfunktion, nicht als Veränderung einer Abstrahlcharakteristik verstanden werden. Dementsprechend werden im Sinne der vorliegenden Erfindung Komponenten, die eine reine Parallelverschiebung von Lichtwellen erzeugen, wie zum Beispiel transparente Abdeckungen ohne Linsen- oder Blendenfunktion, nicht als zum optischen System zugehörig angesehen.

Durch die Anordnung eines optischen Systems im Inneren des Griffkörpers kann die Abstrahlcharakteristik in geeigneter Weise beeinflusst werden, ohne dass die dafür erforderlichen optischen Komponenten aus üblichen Blickpunkten außerhalb des Fahrzeugs wahrnehmbar sind. Dabei sind insbesondere sämtliche Komponenten des optischen Systems, die zur Veränderung der Abstrahlcharakteristik des von der Lichtquelle abgestrahlten Lichts ausgebildet sind, innenliegend im Griffkörper mit einem Abstand von dessen Außenkontur angeordnet. Die Außenkontur des Griffkörpers kann unabhängig von dem Diffusor und/oder dem optischen System ausgebildet sein. Die Außenkontur kann auf diese Weise vornehmlich im Hinblick auf haptische Erfordernisse und zur Erzeugung eines ansprechenden Erscheinungsbilds geformt sein, ohne dass die Funktionalität der Beleuchtung beeinträchtigt wird.

Erfindungsgemäß ist die Außenkontur des Griffkörpers frei von Komponenten und/oder Abschnitten zur Veränderung der Abstrahlcharakteristik des von der Lichtquelle abgestrahlten Lichts ausgebildet. Dabei sind die die Außenkontur des Griffkörpers bildenden Komponenten und/oder Abschnitte bevorzugt frei von Linsen- und/oder Blenden- und/oder Lichtdiffusionseigenschaften. Die Gefahr der Wahrnehmbarkeit von Lichtaustrittsflächen wird auf diese Weise weiter reduziert.

Gemäß einer weiter bevorzugten Ausführungsform weist der Griffkörper eine Lichtaustrittsöffnung auf, insbesondere für den Austritt des von der Lichtquelle abgestrahlten und/oder von dem optischen System in seiner Abstrahlcharakteristik veränderten Lichts aus dem Griffkörper. Die Lichtquelle und/oder der Diffusor und/oder das gesamte optische System können benachbart zu beziehungsweise fluchtend mit der Lichtaustrittsöffnung angeordnet sein, um einen geeigneten beziehungsweise ungehinderten Lichtaustritt aus dem Griffkörper zu gewährleisten, wobei die Anordnung der Komponenten im Inneren des Griffkörpers die Bereitstellung der jeweiligen optischen Funktionen sicherstellt.

Es kann weiterhin von Vorteil sein, wenn der Griffkörper ein Lichtaustrittselement zur Durchleitung des von der Lichtquelle abgestrahlten und/oder von dem optischen System in seiner Abstrahlcharakteristik veränderten Lichts aus dem Griffkörper aufweist. Ein solches Lichtaustrittselement kann insbesondere eine geeignete Lichtaustrittsfläche aufweisen, die aufgrund der Beschaffenheit des Lichtaustrittselements eine verringerte Gefahr der Wahrnehmung durch einen Betrachter gewährleistet. Hierzu kann das Lichtaustrittselement bevorzugt frei von Linsen-und/oder Lichtdiffusionseigenschaften ausgebildet sein. Die Wahrnehmbarkeit eines solchen Lichtaustrittselements mit einer daran ausgebildeten Lichtaustrittsfläche ist beispielsweise im Vergleich zu einem aufgerauten oder einem als Sammellinse ausgebildeten Lichtaustrittselement reduziert. In bevorzugter Weise besteht das Lichtaustrittselement dabei aus einem transparenten Material, insbesondere aus einem Kunststoffmaterial, das mit nur geringen Fertigungskosten herstellbar ist.

Gemäß einer weiteren vorteilhaften Ausgestaltung ist/sind der Griffkörper und/oder die Außenkontur des Griffkörpers durch zumindest eine Griffschale gebildet, bevorzugt durch eine Mehrzahl von Griffschalen. Hierdurch kann die Montage des gesamten Türaußengriffs vereinfacht werden.

Die Lichtaustrittsöffnung ist bevorzugt in einer Griffschale ausgebildet oder durch Randbereiche von angrenzenden Griffschalen definiert. Dabei kann das Lichtaustrittselement in der Lichtaustrittsöffnung angeordnet und/oder die Lichtaustrittsöffnung zumindest annähernd vollständig von dem Lichtaustrittselement ausgefüllt sein. Der Innenraum des Griffkörpers kann auf diese Weise verschlossen beziehungsweise geeignet abgedeckt sein, sodass die im Innenraum angeordneten Komponenten vor Umwelteinflüssen geschützt werden können.

Das Lichtaustrittselement kann abschnittsweise die Außenkontur des Griffkörpers bilden. Trotz Vorsehen einer Beleuchtung mit einer entsprechenden Lichtaustrittsöffnung kann auf diese Weise eine in der Form annähernd homogene, ununterbrochene beziehungsweise stufenfreie Außenkontur bereitgestellt werden. Hierzu kann das Lichtaustrittselement mit zumindest einer der Griffschalen oder auch mit einer Mehrzahl von Griffschalen im Wesentlichen bündig und/oder stufenfrei abschließen. Die Außenkontur des gesamten Griffkörpers kann durch das Lichtaustrittselement im Wesentlichen unbeeinträchtigt sein und/oder der Verlauf der Außenkontur kann durch den Übergang zwischen dem Lichtaustrittselement und zumindest einer der Griffschalen im Wesentlichen unverändert sein. Ebenso kann sich der Verlauf der durch das Lichtaustrittselement gebildeten Außenkonturabschnitte in angrenzende Außenkonturabschnitte, die insbesondere durch zumindest eine Griffschale gebildet sind, einfügen. Hierdurch lassen sich ein ansprechendes Aussehen sowie gute haptische Eigenschaften des Türaußengriffs erzielen.

Erfindungsgemäß ist zwischen dem Diffusor und der Lichtquelle eine Linse angeordnet, insbesondere eine Sammellinse, die bevorzugt als Teil des optischen Systems ausgebildet ist. Durch eine solche Linse lassen sich beispielsweise Bündelungen der Lichtstrahlen und somit eine fokussierte Ausleuchtung jeweils gewünschter Ausleuchtungsbereiche erzielen.

Es kann weiter von Vorteil sein, wenn der Diffusor und das Lichtaustrittselement zusammenhängend und/oder einstückig ausgebildet sind, wodurch sowohl die Fertigung als auch die Montage vereinfacht werden können. Ferner kann zwischen dem Diffusor und Lichtaustrittselement ein Zwischenraum ausgebildet sein, der insbesondere versiegelt ist, bevorzugt durch eine Abdeckung versiegelt ist. Durch eine solche Versiegelung des Zwischenraums wird die Gefahr von Beeinträchtigungen der im Griffinneren angeordneten optischen Elemente sowie der Lichtquelle verringert. Besonders bevorzugt kann die Abdeckung zur Versiegelung des Zwischenraums im Griffkörper innenliegend angeordnet sein, wodurch auch die Versiegelung im Griffinneren geschützt ist.

Gemäß einer bevorzugten Ausführungsform ist die Lichtquelle als LED ausgebildet und/oder auf einer Leiterplatte angeordnet. Dies lässt sich mit nur geringen Kosten bewerkstelligen und gewährleistet ein hohes Maß an Beleuchtungssicherheit. Dabei kann die Leiterplatte in einer Vergussmasse eingebettet und/oder von einer Schutzschicht überzogen sein, bevorzugt von einem zweikomponentigen Polyurethanlack. Hierdurch kann die Leiterplatte vor äußeren Einflüssen geeignet geschützt und die Langlebigkeit gesteigert werden.

Weiterhin kann es von Vorteil sein, wenn im Griffkörper eine Stützstruktur aufgenommen ist, die zur Stützung des Diffusors und/der Lichtquelle und/oder der Linse und/oder des Lichtaustrittselements ausgebildet ist. Die Montage wird hierdurch erleichtert und der dauerhaft korrekte Sitz der jeweiligen Komponenten gewährleistet. Dabei kann die Stützstruktur mit dem Diffusor und/oder dem Lichtaustrittselements zusammenhängend und/oder einstückig ausgebildet sein und/oder Stützflächen zur Abstützung der Linse und/oder der Leiterplatte mit der darauf angeordneten Lichtquelle aufweisen.

Gemäß einem weiteren Aspekt der vorliegenden Erfindung ist ein Türaußengriff, insbesondere für ein Kraftfahrzeug, mit einem eine Außenkontur aufweisenden Griffkörper, mit einer von dem Griffkörper aufgenommenen Lichtquelle für eine Vorfeld- und/oder Griffmuldenbeleuchtung und mit einem optischen System ausgestattet, das zur Veränderung der Abstrahlcharakteristik des von der Lichtquelle abgestrahlten Lichts innenliegend im Griffkörper mit einem Abstand von dessen Außenkontur angeordnet ist. Ein solcher Türaußengriff kann bevorzugt auch entsprechend der voranstehend beschriebenen Einzelheiten ausgestattet sein.

Wie bereits dargelegt, wird hier unter Abstrahlcharakteristik insbesondere die Form, Größe und/oder Richtung der Lichtausbreitung beziehungsweise des Lichtkegels und/der der Grad der Diffusion des Lichts verstanden. Im Sinne der vorliegenden Erfindung soll dementsprechend die reine Parallelverschiebung von Lichtwellen, etwa durch transparente Abdeckungen ohne Linsenfunktion, nicht als Veränderung einer Abstrahlcharakteristik verstanden werden. Komponenten, die eine reine Parallelverschiebung von Lichtwellen erzeugen, wie zum Beispiel transparente Abdeckungen ohne Linsenfunktion, werden erfindungsgemäß also nicht als zum optischen System zugehörig angesehen.

Wie voranstehend bereits dargelegt, kann durch die Anordnung eines optischen Systems im Inneren des Griffkörpers die Abstrahlcharakteristik in geeigneter Weise beeinflusst werden, ohne dass die dafür erforderlichen optischen Komponenten aus gewöhnlichen Blickpunkten außerhalb des Fahrzeugs wahrnehmbar sind. Bevorzugt sind demnach sämtliche Komponenten des optischen Systems, die zur Veränderung der Abstrahlcharakteristik des von der Lichtquelle abgestrahlten Lichts ausgebildet sind, innenliegend im Griffkörper mit einem Abstand von dessen Außenkontur angeordnet. Die Außenkontur des Griffkörpers kann unabhängig von dem optischen System ausgebildet sein. Hierdurch kann die Außenkontur vornehmlich im Hinblick auf haptische Anforderungen und im Hinblick auf ein ansprechendes Erscheinungsbild geformt sein, ohne dass die Funktionalität der Beleuchtung beeinträchtigt wird.

Ein noch weiterer Aspekt der Erfindung betrifft ein Kraftfahrzeug, insbesondere Personenkraftwagen, mit zumindest einer Tür und einem an der Tür angeordneten Türaußengriff, wie voranstehend beschrieben.

In bevorzugter Weise ist/sind die Lichtaustrittsöffnung und/oder das Lichtaustrittselement einer Griffmulde der Fahrzeugtür und/oder einem Fahrzeuguntergrund, insbesondere einer Fahrbahn, zugewandt. Hierdurch lässt sich die Bedienfreundlichkeit des Fahrzeugs verbessern.

Gemäß einer bevorzugten Ausgestaltung des Fahrzeugs ist/sind der Diffusor und/oder Komponenten des optischen Systems, die zur Veränderung der Abstrahlcharakteristik des von der Lichtquelle abgestrahlten Lichts ausgebildet sind, ausgehend von einem Blickpunkt, der sich in mindestens 10 m Abstand zu dem Türaußengriff und in einer Höhe von zumindest 1 m über dem Fahrzeuguntergrund, insbesondere der Fahrbahn, befindet, verdeckt, bevorzugt von einem Griffschalenabschnitt verdeckt, angeordnet. Die Gefahr der Wahrnehmbarkeit von Lichtaustrittsflächen ausgehend von gewöhnlichen Blickpunkten außerhalb des Fahrzeugs wird hierdurch reduziert und die Einhaltung gesetzlicher Vorschriften zu Fahrzeugaußenbeleuchtungen begünstigt.

Nachfolgend wird die Erfindung rein beispielhaft unter Bezugnahme auf die beigefügte Zeichnung anhand einer möglichen Ausführungsform beschrieben.
- Fig. 1: ist eine perspektivische Ansicht eines erfindungsgemäßen Türaußen-griffs;
- Fig. 2: ist eine seitliche Detailansicht des Türaußengriffs von Fig. 1 mit Licht-austrittsöffnung;
- Fig. 3: ist eine schematische Querschnittsdarstellung des Türaußengriffs von Fig. 1 und 2;
- Fig. 4: ist schematische Seitenansicht einer Beleuchtungseinrichtung des Türaußengriffs von Fig. 1 bis 3.

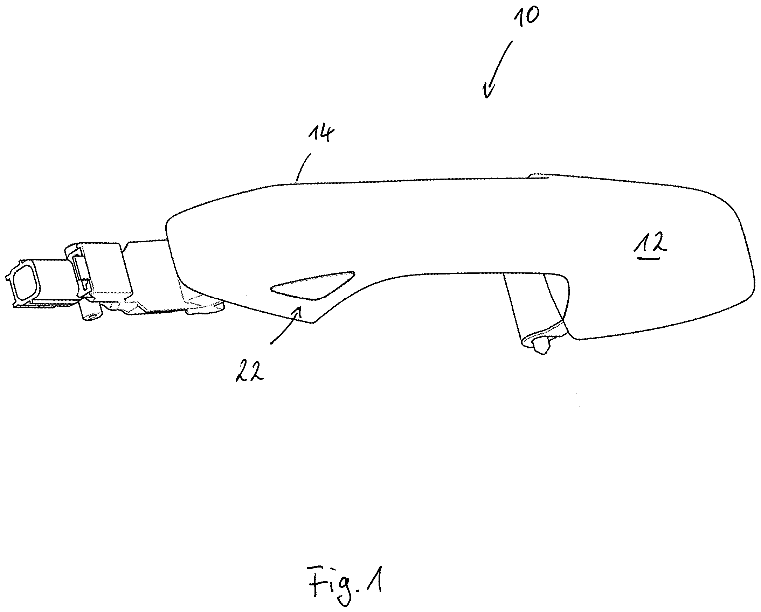

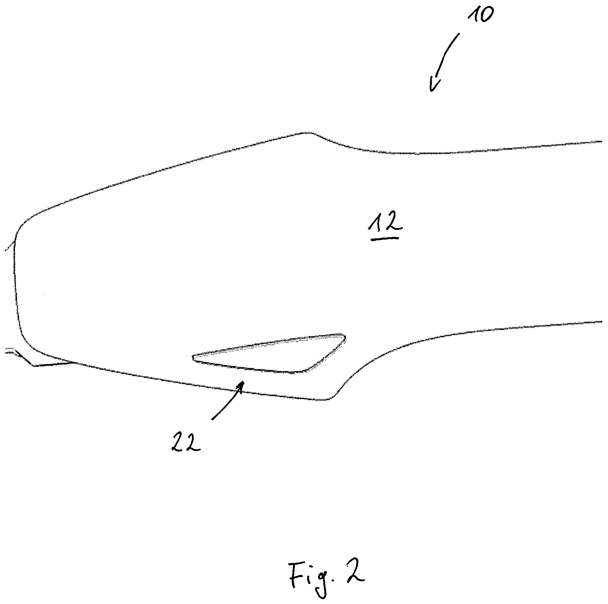

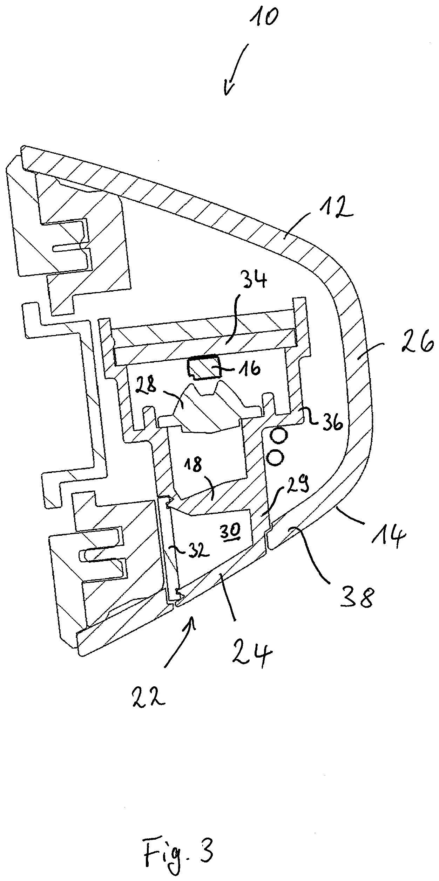

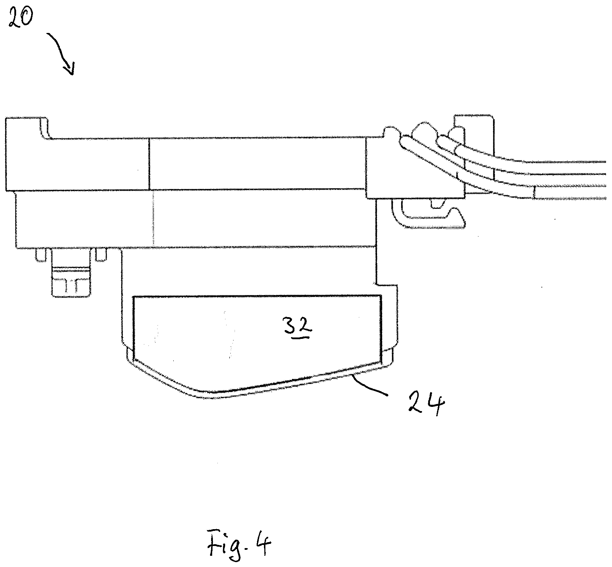

In Fig. 1 ist ein Türaußengriff 10 für ein hier nicht dargestelltes Kraftfahrzeug in perspektivischer Ansicht gezeigt. Die Fig. 2 zeigt eine seitliche Detailansicht des Türaußengriffs. Der Türaußengriff 10 weist einen Griffkörper 12 mit einer Außenkontur 14 auf. Wie der in Fig. 3 gezeigten schematischen Schnittdarstellung des Türaußengriffs 10 entnommen werden kann, ist in dem Griffkörper 10 eine Lichtquelle 16 sowie ein Diffusor 18 für eine Vorfeld- und/oder Griffmuldenbeleuchtung aufgenommen. Die Lichtquelle 16 und der Diffusor 18 sind Teil einer Beleuchtungseinrichtung 20, die in Fig. 4 in schematischer Seitenansicht gezeigt ist.

Der Diffusor 18 ist zur Streuung des von der Lichtquelle 14 abgestrahlten Lichts in diffuses Licht innenliegend im Griffkörper 12 mit einem Abstand von dessen Außenkontur 14 angeordnet. Dementsprechend kann der Diffusor 18 einen Teil eines optischen Systems bilden, das zur Veränderung der Abstrahlcharakteristik des von der Lichtquelle 16 abgestrahlten Lichts innenliegend im Griffkörper 12 mit einem Abstand von dessen Außenkontur 14 angeordnet ist. Die Außenkontur 14 des Griffkörpers 12 ist dabei unabhängig von dem Diffusor 16 und/oder dem optischen System ausgebildet. Dies reduziert die Gefahr der Wahrnehmbarkeit des Diffusors 18 beziehungsweise weiterer zur Veränderung der Abstrahlcharakteristik ausgebildeter Komponenten von einer Blickposition außerhalb des Fahrzeugs.

Der Griffkörper 12 weist ferner eine Lichtaustrittsöffnung 22 auf, durch welche das von der Lichtquelle 16 abgestrahlte und/oder von dem Diffusor 18 beziehungsweise weiteren Komponenten eines optischen Systems in seiner Abstrahlcharakteristik veränderte Licht aus dem Griffkörper 12 austreten kann. In der Lichtaustrittsöffnung 22 ist ein Lichtaustrittselement 24 zur Durchleitung des von der Lichtquelle 16 abgestrahlten und/oder von dem Diffusor 18 beziehungsweise von dem optischen System in seiner Abstrahlcharakteristik veränderten Lichts aus dem Griffkörper angeordnet. Das Lichtaustrittselement 24 ist insbesondere frei von Linsen-und/oder Lichtdiffusionseigenschaften und aus einem transparenten Material ausgebildet.

Gleichzeitig bildet das Lichtaustrittselement 24 abschnittsweise die Außenkontur 14 des Griffkörpers 12 aus. Hierdurch wird sichergestellt, dass die Außenkontur 14 des Griffkörpers 12 frei von Komponenten und/oder Materialabschnitten zur Veränderung der Abstrahlcharakteristik des von der Lichtquelle 16 abgestrahlten Lichts ist, da das Lichtaustrittselement 24 weder eine Diffusion des abgestrahlten Lichts erzeugt noch eine Linsenfunktionalität bereitstellt. Durch das Lichtaustrittselement 24 erfolgt durch Brechung an den Oberflächen allenfalls eine Parallelverschiebung des Lichts, was im Sinne der vorliegenden Erfindung jedoch nicht als Veränderung der Abstrahlcharakteristik angesehen wird.

Der Griffkörper 12 und/oder die Außenkontur 14 des Griffkörpers 12 kann durch zumindest eine Griffschale 26 gebildet sein, in der auch die Lichtaustrittsöffnung 22 ausgebildet ist. Das Lichtaustrittselement 24 schließt mit der die Lichtaustrittsöffnung 22 definierende Griffschale 26 im Wesentlichen bündig und/oder stufenfrei ab. Die Außenkontur 14 bleibt durch die Anordnung des Lichtaustrittselements 24 in der Lichtaustrittsöffnung 22 im Wesentlichen unbeeinträchtigt beziehungsweise bleibt der Verlauf der Außenkontur 14 durch den Übergang zwischen dem Lichtaustrittselement 24 und der jeweils angrenzenden Griffschale 26 im Wesentlichen unverändert.

Wie sich ferner aus der Fig. 3 ergibt, ist zwischen dem Diffusor 18 und der Lichtquelle 16 eine Linse 28 angeordnet, die insbesondere als Sammellinse ausgebildet sein kann. Die Linse ist Teil des voranstehend erwähnten optischen Systems und damit auch Teil der Beleuchtungseinrichtung 20.

Die Beleuchtungseinrichtung 20 kann somit die Lichtquelle 16, den Diffusor 18, die Linse 28 sowie das Lichtaustrittselement 24 umfassen. Demgegenüber wird in der vorliegenden erfindungsgemäßen Ausgestaltung das optische System lediglich durch den Diffusor 18 und die Linse 28 gebildet, wohingegen insbesondere das Lichtaustrittselement 24 nicht als Teil des optischen Systems anzusehen ist.

Der Diffusor 18 und das Lichtaustrittselement 24 können zusammenhängend und/oder einstückig ausgebildet sein, insbesondere durch den Verbindungsabschnitt 29 miteinander verbunden sein. Ferner ist zwischen dem Diffusor 18 und Lichtaustrittselement 24 ein Zwischenraum 30 ausgebildet, der bevorzugt durch eine Abdeckung 32 versiegelt sein kann. Die Versiegelung durch die Abdeckung 32 kann mittels Ultraschallschweißens vorgenommen werden. Dabei kann die Abdeckung 32 zumindest abschnittsweise mit dem Lichtaustrittselement 24 verschweißt sein. Wie sich aus der Figur 3 ergibt, ist auch die Abdeckung 32 im Griffkörper 12 innenliegend angeordnet. In der Figur 4 ist zu sehen, dass eine der Außenkanten der Abdeckung 32, insbesondere im Verbindungsbereich mit dem Lichtaustrittselement 24, der Außenkontur des Lichtaustrittselements 24 und damit der Außenkontur 14 des Griffkörpers 12 folgt.

Die Lichtquelle 16 ist vorzugsweise als LED ausgebildet und auf einer Leiterplatte 34 angeordnet, die insbesondere in einer Vergussmasse eingebettet und/oder von einer Schutzschicht überzogen sein kann. Bei der Vergussmasse beziehungsweise der Schutzschicht kann es ich beispielsweise um einen zweikomponentigen Polyurethanlack handeln.

Im Griffkörper 12 ist schließlich eine Stützstruktur 36 aufgenommen, die zur Stützung des Diffusors 18, der Lichtquelle 16, der Linse 28 sowie des Lichtaustrittselements 24 ausgebildet ist. Dabei kann die Stützstruktur 36 mit dem Diffusor 18 und/oder dem Lichtaustrittselement 24 zusammenhängend und/oder einstückig ausgebildet sein. Schließlich können an der Stützstruktur 36 Stützflächen zur Abstützung der Linse 28 und/oder der Leiterplatte 34 mit der darauf angeordneten Lichtquelle 16 vorgesehen sein.

In einem am Fahrzeug beziehungsweise einer Fahrzeugtür des jeweiligen Fahrzeugs montierten Stellung des Türaußengriffs 10 ist die Lichtaustrittsöffnung 22 und/oder das Lichtaustrittselement 24 einem hier nicht gezeigten Fahrzeuguntergrund, insbesondere einer Fahrbahn, zugewandt. In einer solchen Befestigungsposition und/oder -orientierung des Türaußengriffs kann der Diffusor 18 ausgehend von einem Blickpunkt, der sich in mindestens 10 m Abstand zu dem Türaußengriff 10 und in einer Höhe von zumindest 1 m über dem Fahrzeuguntergrund, insbesondere der Fahrbahn, befindet, verdeckt sein. Der Diffusor 18 ist aus einer derartigen Blickposition bevorzugt durch einen Griffschalenabschnitt 38 verdeckt angeordnet. Ebenso können auch alle weiteren Komponenten eines optischen Systems, die zur Veränderung der Abstrahlcharakteristik des von der Lichtquelle 16 abgestrahlten Lichts ausgebildet sind, aus einer voranstehend erwähnten Blickposition durch einen Griffschalenabschnitt 38 verdeckt angeordnet sein. Der Griffschalenabschnitt 38 grenzt insbesondere an die Lichtaustrittsöffnung 22 und/oder an das Lichtaustrittselement 24 an.

### Bezugszeichenliste

- 10: Türaußengriff
- 12: Griffkörper
- 14: Außenkontur
- 16: Lichtquelle
- 18: Diffusor
- 20: Beleuchtungseinrichtung
- 22: Lichtaustrittsöffnung
- 24: Lichtaustrittselement
- 26: Griffschale
- 28: Linse
- 29: Verbindungsabschnitt
- 30: Zwischenraum
- 32: Abdeckung
- 34: Leiterplatte
- 36: Stützstruktur
- 38: Griffschalenabschnitt

## Patentansprüche

1. Türaußengriff (10), insbesondere für ein Kraftfahrzeug, mit einem eine Außenkontur (14) aufweisenden Griffkörper (12), mit einer von dem Griffkörper (12) aufgenommenen Lichtquelle (16) für eine Vorfeld- und/oder Griffmuldenbeleuchtung und mit einem Diffusor (18), der zur Streuung des von der Lichtquelle (16) abgestrahlten Lichts in diffuses Licht innenliegend im Griffkörper (12) mit einem Abstand von dessen Außenkontur (14) angeordnet ist,
**dadurch gekennzeichnet, dass**
die Außenkontur (14) des Griffkörpers (12) frei von Komponenten und/oder Abschnitten zur Veränderung der Abstrahlcharakteristik des von der Lichtquelle (16) abgestrahlten Lichts ist und
zwischen dem Diffusor (18) und der Lichtquelle (16) eine Linse (28) angeordnet ist.

2. Türaußengriff (10) nach Anspruch 1,
**dadurch gekennzeichnet, dass**
der Diffusor (18) eine aufgeraute Oberfläche und/oder in seinem Volumen eingeschlossene Streuzentren aufweist.

3. Türaußengriff (10) nach Anspruch 1 oder 2,
**dadurch gekennzeichnet, dass**
der Diffusor (18) Teil eines optischen Systems ist, das zur Veränderung der Abstrahlcharakteristik des von der Lichtquelle (16) abgestrahlten Lichts innenliegend im Griffkörper (12) mit einem Abstand von dessen Außenkontur (14) angeordnet ist, bevorzugt sämtliche Komponenten des optischen Systems, die zur Veränderung der Abstrahlcharakteristik des von der Lichtquelle (16) abgestrahlten Lichts ausgebildet sind, innenliegend im Griffkörper (12) mit einem Abstand von dessen Außenkontur (14) angeordnet sind, und/oder wobei die Außenkontur (14) des Griffkörpers (12) unabhängig von dem Diffusor (18) und/oder dem optischen System ausgebildet ist.

4. Türaußengriff (10) nach zumindest einem der voranstehenden Ansprüche,
**dadurch gekennzeichnet, dass**
die die Außenkontur (14) des Griffkörpers (12) bildenden Komponenten und/oder Abschnitte frei von Linsen- und/oder Blenden- und/oder Lichtdiffusionseigenschaften sind.

5. Türaußengriff (10) nach zumindest einem der voranstehenden Ansprüche,
**dadurch gekennzeichnet, dass**
der Griffkörper (12) eine Lichtaustrittsöffnung (22) aufweist, insbesondere für den Austritt des von der Lichtquelle (16) abgestrahlten und/oder von dem optischen System, insbesondere dem Diffusor (18), in seiner Abstrahlcharakteristik veränderten Lichts aus dem Griffkörper (12).

6. Türaußengriff (10) nach zumindest einem der voranstehenden Ansprüche,
**dadurch gekennzeichnet, dass**
der Griffkörper (12) ein Lichtaustrittselement (24) zur Durchleitung des von der Lichtquelle (16) abgestrahlten und/oder von dem optischen System in seiner Abstrahlcharakteristik veränderten Lichts aus dem Griffkörper (12) aufweist, wobei das Lichtaustrittselement (24) bevorzugt frei von Linsen-und/oder Lichtdiffusionseigenschaften ausgebildet ist, insbesondere aus einem transparenten Material, weiter bevorzugt aus einem Kunststoffmaterial.

7. Türaußengriff (10) nach zumindest einem der vorstehenden Ansprüche,
**dadurch gekennzeichnet, dass**
der Griffkörper (12) und/oder die Außenkontur (14) des Griffkörpers (12) durch zumindest eine Griffschale (26) gebildet ist, bevorzugt durch eine Mehrzahl von Griffschalen, wobei die Lichtaustrittsöffnung (22) in einer Griffschale (26) ausgebildet ist oder durch Randbereiche von angrenzenden Griffschalen definiert ist und/oder wobei das Lichtaustrittselement (24) in der Lichtaustrittsöffnung (22) angeordnet ist und/oder die Lichtaustrittsöffnung (22) zumindest annähernd vollständig ausfüllt und/oder wobei das Lichtaustrittselement (24) abschnittsweise die Außenkontur (14) des Griffkörpers (12) bildet.

8. Türaußengriff (10) nach Anspruch 7,
**dadurch gekennzeichnet, dass**
das Lichtaustrittselement (24) mit zumindest einer der Griffschalen (26), bevorzugt mit beiden Griffschalen, im Wesentlichen bündig und/oder stufenfrei abschließt und/oder wobei die Außenkontur (14) des gesamten Griffkörpers (12) durch das Lichtaustrittselement (24) im Wesentlichen unbeeinträchtigt ist und/oder wobei der Verlauf der Außenkontur (14) durch den Übergang zwischen dem Lichtaustrittselement (24) und zumindest einer der Griffschalen (26) im Wesentlichen unverändert ist und/oder wobei der Verlauf der durch das Lichtaustrittselement (24) gebildeten Außenkonturabschnitte sich einfügt in angrenzende Außenkonturabschnitte, die insbesondere durch zumindest eine Griffschale (26) gebildet sind.

9. Türaußengriff (10) nach zumindest einem der vorstehenden Ansprüche,
**dadurch gekennzeichnet, dass**
die Linse (28) eine Sammellinse ist, die bevorzugt als Teil des optischen Systems ausgebildet ist, und/oder der Diffusor (18) und das Lichtaustrittselement (24) zusammenhängend und/oder einstückig ausgebildet sind und/oder zwischen dem Diffusor (18) und Lichtaustrittselement (24) ein Zwischenraum (30) ausgebildet ist, der insbesondere versiegelt, bevorzugt durch eine Abdeckung (32) versiegelt ist, die weiter bevorzugt im Griffkörper (12) innenliegend angeordnet ist.

10. Türaußengriff (10) nach zumindest einem der vorstehenden Ansprüche,
**dadurch gekennzeichnet, dass**
die Lichtquelle (16) als LED ausgebildet und/oder auf einer Leiterplatte (34) angeordnet ist, die insbesondere in einer Vergussmasse eingebettet und/oder von einer Schutzschicht überzogen ist, bevorzugt von einem zweikomponentigen Polyurethanlack.

11. Türaußengriff (10) nach zumindest einem der vorstehenden Ansprüche,
**dadurch gekennzeichnet, dass**
im Griffkörper (12) eine Stützstruktur (36) aufgenommen ist, die zur Stützung des Diffusors (18) und/der Lichtquelle (16) und/oder der Linse (28) und/oder des Lichtaustrittselements (24) ausgebildet ist, wobei die Stützstruktur (36) mit dem Diffusor (18) und/oder dem Lichtaustrittselements (24) zusammenhängend und/oder einstückig ausgebildet ist und/oder Stützflächen zur Abstützung der Linse (28) und/oder der Leiterplatte (34) mit der darauf angeordneten Lichtquelle (16) aufweist.

12. Kraftfahrzeug, insbesondere Personenkraftwagen, mit zumindest einer Tür und einem an der Tür angeordneten Türaußengriff (10) nach zumindest einem der voranstehenden Ansprüche.

13. Kraftfahrzeug nach Anspruch 12,
**dadurch gekennzeichnet, dass**
die Lichtaustrittsöffnung (22) und/oder das Lichtaustrittselement (24) einer Griffmulde der Fahrzeugtür und/oder einem Fahrzeuguntergrund, insbesondere einer Fahrbahn, zugewandt ist/sind.

14. Kraftfahrzeug nach Anspruch 12 oder 13,
**dadurch gekennzeichnet, dass**
der Diffusor (18) und/oder Komponenten des optischen Systems, die zur Veränderung der Abstrahlcharakteristik des von der Lichtquelle (16) abgestrahlten Lichts ausgebildet sind, ausgehend von einem Blickpunkt, der sich in mindestens 10 m Abstand zu dem Türaußengriff (10) und in einer Höhe von zumindest 1 m über dem Fahrzeuguntergrund, insbesondere der Fahrbahn, befindet, verdeckt ist/sind, bevorzugt von einem Griffschalenabschnitt (38) verdeckt angeordnet ist/sind.

## Claims

1. An outside door handle (10), in particular for a motor vehicle, having a handle body (12) which has an outer contour (14), having a light source (16) which is received by the handle body (12) for a front area lighting and/or for a door handle cup lighting, and having a diffuser (18) which is inwardly arranged in the handle body (12) at a spacing from its outer contour (14) for scattering the light irradiated by the light source (16) into diffuse light, **characterized in that**
the outer contour (14) of the handle body (12) is free of components and/or sections for changing the irradiation characteristics of the light irradiated from the light source (16); and
**in that** a lens (28) is arranged between the diffuser (18) and the light source (16).

2. An outside door handle (10) in accordance with claim 1,
**characterized in that**
the diffuser (18) has a roughened surface and/or has scattering centers included in its volume.

3. An outside door handle (10) in accordance with claim 1 or claim 2,
**characterized in that**
the diffuser (18) is part of an optical system which is inwardly arranged in the handle body (12) at a spacing from its outer contour (14) for changing the irradiation characteristics of the light irradiated from the light source (16), preferably all of the components of the optical system which are configured for changing the irradiation characteristics of the light irradiated from the light source (16) are inwardly arranged in the handle body (12) at a spacing from its outer contour (14), and/or with the outer contour (14) of the handle body (12) being formed independently of the diffuser (18) and/or of the optical system.

4. An outside door handle (10) in accordance with at least one of the preceding claims,
**characterized in that**
the components and/or sections forming the outer contour (14) of the handle body (12) are free of lens properties and/or diaphragm properties and/or light diffusion properties.

5. An outside door handle (10) in accordance with at least one of the preceding claims,
**characterized in that**
the handle body (12) has a light emitting opening (22), in particular for the emission of the light from the handle body (12) which is irradiated from the light source (16) and/or which is changed in its irradiation characteristics by the optical system, in particular by the diffuser (18).

6. An outside door handle (10) in accordance with at least one of the preceding claims,
**characterized in that**
the handle body (12) has a light emitting element (24) for conducting the light from the handle body (12) which is irradiated from the light source (16) and/or which is changed in its irradiation characteristics by the optical system, with the light emitting element (24) preferably being free of lens properties and/or of light diffusion properties, in particular being formed from a transparent material, further preferably from a plastic material.

7. An outside door handle (10) in accordance with at least one of the preceding claims,
**characterized in that**
the handle body (12) and/or the outer contour (14) of the handle body (12) is/are formed by at least one handle plate (26), preferably by a plurality of handle plates, with the light emitting opening (22) being formed in a handle plate (26) or being defined by marginal regions of adjacent handle plates, and/or with the light emitting element (24) being arranged in the light emitting opening (22) and/or at least approximately fully filling the light emitting opening (22), and/or with the light emitting element (24) sectionally forming the outer contour (14) of the handle body (12).

8. An outside door handle (10) in accordance with claim 7,
**characterized in that**
the light emitting element (24) terminates at least substantially flush and/or step-free with at least one of the handle plates (26), preferably with both handle plates, and/or with the outer contour (14) of the total handle body (12) being substantially unimpaired by the light emitting element (24), and/or with the extent of the outer contour (14) being substantially unchanged by the transition between the light emitting element (24) and at least one of the handle plates (26), and/or with the extent of the outer contour sections formed by the light emitting element (24) integrating into adjacent outer contour sections which are in particular formed by at least one handle plate (26).

9. An outside door handle (10) in accordance with at least one of the preceding claims,
**characterized in that**
a lens (28) is a converging lens which is preferably formed as part of the optical system, and/or the diffuser (18) and the light emitting element (24) are formed as contiguous and/or in one piece, and/or an intermediate space (30), which is in particular sealed, preferably sealed by a cover (32) which is further preferably inwardly arranged in the handle body (12), is formed between the diffuser (18) and the light emitting element (24).

10. An outside door handle (10) in accordance with at least one of the preceding claims,
**characterized in that**
the light source (16) is formed as an LED and/or is arranged on a circuit board (34) which is in particular embedded in a compound and/or is covered by a protective film, preferably by a two-component polyurethane lacquer.

11. An outside door handle (10) in accordance with at least one of the preceding claims,
**characterized in that**
a support structure (36) is received in the handle body (12) and is configured for supporting the diffuser (18) and/or the light source (16) and/or the lens (28) and/or the light emitting element (24), with the support structure (36) being formed as contiguous and/or in one piece with the diffuser (18) and/or with the light emitting element (24) and/or having support surfaces for supporting the lens (28) and/or the circuit board (34) with the light source (16) arranged thereon.

12. A motor vehicle, in particular a passenger car, having at least one door and one outside door handle (10) arranged at the door in accordance with at least one of the preceding claims,

13. A motor vehicle in accordance with claim 12,
**characterized in that**
the light emitting opening (22) and/or the light emitting element (24) faces/face a handle cup of the vehicle door and/or a ground below the vehicle, in particular a road.

14. A motor vehicle in accordance with claim 12 or claim 13,
**characterized in that**
the diffuser (18) and/or components of the optical system which are configured to change the irradiation characteristics of the light irradiated from the light source (16) is/are arranged in a covered manner, preferably covered by a handle plate section (38), starting from a point of view which is located at a distance of at least 10 m from the outside door handle (10) and at a height of at least 1 m above the ground below the vehicle, in particular the road.

## Revendications

1. Poignée extérieure de porte (10), en particulier pour un véhicule automobile, comportant un corps de poignée (12) présentant un contour extérieur (14), une source de lumière (16) reçue par le corps de poignée (12) pour un éclairage du champ environnant et/ou de la cavité de préhension, et un diffuseur (18) qui est disposé en étant situé à l'intérieur du corps de poignée (12) à distance de son contour extérieur (14) afin de diffuser la lumière émise par la source de lumière (16) en une lumière diffuse,
**caractérisée en ce que**
le contour extérieur (14) du corps de poignée (12) est exempt de composants et/ou de portions de modification de la caractéristique de rayonnement de la lumière émise par la source de lumière (16), et
une lentille (28) est disposée entre le diffuseur (18) et la source de lumière (16).

2. Poignée extérieure de porte (10) selon la revendication 1,
**caractérisée en ce que**
le diffuseur (18) présente une surface rendue rugueuse et/ou des centres de diffusion enfermés dans son volume.

3. Poignée extérieure de porte (10) selon la revendication 1 ou 2,
**caractérisée en ce que**
le diffuseur (18) fait partie d'un système optique qui, afin de modifier la caractéristique de rayonnement de la lumière émise par la source de lumière (16), est disposé en étant situé à l'intérieur du corps de poignée (12) à distance de son contour extérieur (14), de préférence tous les composants du système optique, qui sont réalisés pour modifier la caractéristique de rayonnement de la lumière émise par la source de lumière (16), sont disposés en étant situés à l'intérieur du corps de poignée (12) à distance de son contour extérieur (14), et/ou
le contour extérieur (14) du corps de poignée (12) est réalisé indépendamment du diffuseur (18) et/ou du système optique.

4. Poignée extérieure de porte (10) selon l'une au moins des revendications précédentes,
**caractérisée en ce que**
les composants et/ou les portions formant le contour extérieur (14) du corps de poignée (12) sont exempts de propriétés de lentille et/ou de diaphragme et/ou de diffusion de lumière.

5. Poignée extérieure de porte (10) selon l'une au moins des revendications précédentes,
**caractérisée en ce que**
le corps de poignée (12) présente une ouverture de sortie de lumière (22), en particulier pour la sortie de la lumière émise par la source de lumière (16) et/ou de la lumière dont la caractéristique de rayonnement est modifiée par le système optique, en particulier par le diffuseur (18), hors du corps de poignée (12).

6. Poignée extérieure de porte (10) selon l'une au moins des revendications précédentes,
**caractérisée en ce que**
le corps de poignée (12) présente un élément de sortie de lumière (24) pour le passage de la lumière émise par la source de lumière (16) et/ou de la lumière dont la caractéristique de rayonnement est modifiée par le système optique, hors du corps de poignée (12), l'élément de sortie de lumière (24) étant réalisé de préférence de façon exempte de propriétés de lentille et/ou de diffusion de lumière, en particulier en un matériau transparent, de préférence encore en une matière plastique.

7. Poignée extérieure de porte (10) selon l'une au moins des revendications précédentes,
**caractérisée en ce que**
le corps de poignée (12) et/ou le contour extérieur (14) du corps de poignée (12) est formé par au moins une coque de poignée (26), de préférence par une pluralité de coques de poignée, l'ouverture de sortie de lumière (22) étant ménagée dans une coque de poignée (26) ou étant définie par des zones de bord de coques de poignée adjacentes, et/ou l'élément de sortie de lumière (24) étant disposé dans l'ouverture de sortie de lumière (22) et/ou occupant au moins approximativement complètement l'ouverture de sortie de lumière (22), et/ou l'élément de sortie de lumière (24) formant localement le contour extérieur (14) du corps de poignée (12).

8. Poignée extérieure de porte (10) selon la revendication 7,
**caractérisée en ce que**
l'élément de sortie de lumière (24) se termine sensiblement en affleurement et/ou sans gradin avec l'une au moins des coques de poignée (26), de préférence avec les deux coques de poignée, et/ou le contour extérieur (14) de l'ensemble du corps de poignée (12) n'est sensiblement pas altéré par l'élément de sortie de lumière (24), et/ou le tracé du contour extérieur (14) n'est sensiblement pas modifié par la transition entre l'élément de sortie de lumière (24) et l'une au moins des coques de poignée (26), et/ou le tracé des portions de contour extérieur formées par l'élément de sortie de lumière (24) s'adapte dans des portions de contour extérieur adjacentes qui sont formées en particulier par au moins une coque de poignée (26).

9. Poignée extérieure de porte (10) selon l'une au moins des revendications précédentes,
**caractérisée en ce que**
la lentille (28) est une lentille convergente qui est réalisée de préférence en faisant partie du système optique, et/ou le diffuseur (18) et l'élément de sortie de lumière (24) sont réalisés de façon cohérente et/ou d'un seul tenant, et/ou un espace intermédiaire (30) est formé entre le diffuseur (18) et l'élément de sortie de lumière (24), qui est en particulier scellé, de préférence scellé par un recouvrement (32) qui est disposé de préférence en étant situé à l'intérieur du corps de poignée (12).

10. Poignée extérieure de porte (10) selon l'une au moins des revendications précédentes,
**caractérisée en ce que**
la source de lumière (16) est réalisée sous forme de DEL et/ou est disposée sur une carte de circuit imprimé (34) qui est en particulier noyée dans une masse de scellement et/ou recouverte d'une couche de protection, de préférence d'une laque de polyuréthane à deux composants.

11. Poignée extérieure de porte (10) selon l'une au moins des revendications précédentes,
**caractérisée en ce que**
une structure de soutien (36) est reçue dans le corps de poignée (12), qui est réalisée pour soutenir le diffuseur (18) et/ou la source de lumière (16) et/ou la lentille (28) et/ou l'élément de sortie de lumière (24), la structure de soutien (36) étant réalisée de façon cohérente et/ou d'un seul tenant avec le diffuseur (18) et/ou avec l'élément de sortie de lumière (24), et/ou présentant des surfaces de soutien pour soutenir la lentille (28) et/ou la carte de circuit imprimé (34) avec la source de lumière (16) disposée sur celle-ci.

12. Véhicule automobile, en particulier voiture particulière, comportant au moins une porte et une poignée extérieure de porte (10) selon l'une au moins des revendications précédentes, disposée sur la porte.

13. Véhicule automobile selon la revendication 12,
**caractérisé en ce que**
l'ouverture de sortie de lumière (22) et/ou l'élément de sortie de lumière (24) est/sont tourné(e)(s) vers une cavité de préhension de la porte de véhicule et/ou vers un sol au-dessous du véhicule, en particulier vers une chaussée.

14. Véhicule automobile selon la revendication 12 ou 13,
**caractérisé en ce que**
le diffuseur (18) et/ou des composants du système optique, qui sont réalisés pour modifier la caractéristique de rayonnement de la lumière émise par la source de lumière (16), est/sont disposé(s) de manière dissimulée, de préférence dissimulée par une portion de coque de poignée (38), en partant d'un point d'observation qui se trouve à une distance d'au moins 10 m de la poignée extérieure de porte (10) et à une hauteur d'au moins 1 m au-dessus du sol, en particulier au-dessus de la chaussée.
